# EUROPEAN PATENT APPLICATION

(11) **EP 4 564 922 A1**
(43) Date of publication of application: **04.06.2025**
(21) Application number: 24216554.6
(22) Date of filing: 29.11.2024
(51) Int. Cl.: H04W 36/08, H04W 84/00, H04W 88/04, H04W 88/06

(54) **VEHICULAR COMMUNICATION UNIT WITH INTEGRATED ACCESS AND BACKHAUL RELAY**

(30) Priority: 01.12.2023 US 202363604906 P
(71) Applicant: Molex CVS Hildesheim GmbH, 31135 Hildesheim (DE); Molex CVS Bochum GmbH, 44807 Bochum (DE)
(72) Inventor: BECK, Reiner, Eckental (DE); DORNBUSCH, Guido, Bochum (DE); MÖHLMANN, Ulrich, Eckental (DE)
(74) Representative: Ter Meer Steinmeister & Partner

(57) **Abstract**

Exemplary examples are disclosed of vehicular communication systems comprising communication units including integrated access backhaul (IAB) vehicular mounted relay (VMR) modules. In exemplary examples, the communication unit is configured for providing wireless connectivity with a terrestrial network (TN) and a non-terrestrial network (NTN) outside the vehicle. The communication unit is also configured to provide wireless connectivity to a telecommunication control unit (TCU) and user equipment (UE) inside the vehicle.

## Description

This application claims the benefit of U.S. Provisional Patent No. 63/604,906, filed December 1, 2023, and entitled "Vehicular Communication System Including Communication Unit with Integrated Access and Backhaul (IAB) Vehicular Mounted Relay (VMR) Module.".

### TECHNICAL FIELD

This disclosure generally relates to a vehicular communication system comprising a communication unit including an integrated access backhaul (IAB) vehicular mounted relay (VMR) module. The communication unit is configured to provide wireless connectivity with a terrestrial network (TN) and a non-terrestrial network (NTN) outside the vehicle. The communication unit is also configured to provide wireless connectivity with a telecommunication control unit (TCU) and user equipment (UE) inside the vehicle.

### BACKGROUND

As motor vehicles become more data-driven, the need to communicate with the external world becomes increasingly important. Individuals in vehicles often rely on personal mobile devices for streaming music, communication with others, and navigation. The motor vehicles themselves can also be in contact with external systems. Such communication allows for over-the-air updates from a central server, information about external conditions relevant to the vehicle through vehicle-to-everything (V2X) communication, navigational information, sensor sharing, and high-accuracy positioning. If the vehicle is intended to have autonomous driving features, then having the ability to provide sensed data to a central server can allow for the receipt of improved driving algorithms. Thus, there are numerous reasons for providing data to and from a motor vehicle as well as directly between vehicles, vehicles, and vulnerable road users, like pedestrians and cyclists, as well as vehicles and infrastructure, such as traffic lights. As the operation of a vehicular communication system can be important to safety systems in a vehicle, certain individuals would appreciate further improvements in vehicular communication systems.

### SUMMARY

This section provides a general summary of the disclosure and is not a comprehensive disclosure of its full scope or all of its features.

Exemplary examples are disclosed of vehicular communication systems comprising communication units including integrated access backhaul (IAB) vehicular mounted relay (VMR) modules. In exemplary examples, the communication unit is configured for providing wireless connectivity with a terrestrial network (TN) and/or a non-terrestrial network (NTN) outside the vehicle with backhauling over and seamless handover between the terrestrial and non-terrestrial networks. The communication unit is also configured to provide wireless connectivity to a telecommunication control unit (TCU) and user equipment (UE) inside the vehicle.

Further areas of applicability will become apparent from the description provided herein. The description and specific examples in this summary are intended for illustration purposes and are not intended to limit the scope of the present disclosure.

The object is solved by the features of the independent claims. Preferred embodiments are given in the dependent claims.

According to one aspect a communication unit for a vehicle is provided, comprising: an integrated access backhaul (IAB) vehicular mounted relay (VMR) module; a terrestrial network (TN) antenna for wireless communication via a TN; and a non-terrestrial network (NTN) antenna for wireless communication via a NTN, wherein the communication unit is configured for providing (1) wireless connectivity with the TN and the NTN, (2) backhauling over at least one of the TN and the NTN, and (3) seamless handover between the TN and the NTN; and at least one mmWave antenna for in-vehicle wireless communication.

In one or more embodiments, the communication unit may further comprise at least one antenna for in-vehicle wireless communication with one or more of a telecommunication control unit (TCU) and at least one user equipment inside the vehicle.

In one or more embodiments, the IAB VMR module may be configured for communication selectively with at least one of the TN or the NTN.

In one or more embodiments, the communication unit may further comprise a digital link for connecting the communication unit to a TCU in the vehicle for in-vehicle wired communication between the communication unit and the TCU.

In one or more embodiments, the communication unit may further comprise a Wi-Fi modem configured for wirelessly communication, via one or more antennas, within the vehicle.

In one or more embodiments, the communication unit may further comprise a New Radio (NR) user equipment (UE) module for managing communications with UE connected via the Wi-Fi modem.

In one or more embodiments, the Wi-Fi modem may be operable for providing WLAN access for in-vehicle users via the NR UE module to the terrestrial network or the non-terrestrial network when the NR UE module is activated.

In one or more embodiments, the Wi-Fi modem may be operable for providing WLAN access to a TCU for connectivity to the TN or the NTN when the NR UE module is activated.

In one or more embodiments, the communication unit may be configured to activate the NR UE module for providing cellular connectivity when IAB VMR functionality is not available in a coverage area.

In one or more embodiments, the communication unit may further comprise an e-Call subsystem connected with the NR UE module.

In one or more embodiments, the e-Call subsystem may be configured to enable an in-vehicle passenger to make an emergency call via an e-Call microphone and speaker.

In one or more embodiments, the communication unit may further a C-V2X (Cellular Vehicle-to-Everything) RF front-end module configured for connectivity with a C-V2X antenna.

In one or more embodiments, the Wi-Fi modem may be configured for wirelessly transferring data, via one or more antennas, between the C-V2X RF front-end module and a TCU.

In one or more embodiments, the C-V2X RF front-end module may be configured to be operable for RF modulation/demodulation, C-V2X baseband signal sampling, digitization, and interfacing for wired transmission to the Wi-Fi modem.

In one or more embodiments, the communication unit may further an automotive ethernet module configured to be operable for transferring data over an automotive ethernet link between the communication unit and the TCU.

In one or more embodiments, the automotive ethernet module may be configured to be operable for transferring data over the automotive ethernet link between the C-V2X front-end module and the TCU.

In one or more embodiments, the IAB VMR module may comprise an FR1 RF front-end module configured for connectivity with multiple antennas for MIMO RF reception of backhaul over a Uu link from a TN donor node in a frequency range FR1, or for RF reception of backhaul over a Uu link from an NTN donor node in a satellite.

In one or more embodiments, the IAB VMR module may comprise a first FR2 RF front-end module configured for mmWave reception of backhaul over a Uu link from a TN donor node in a frequency range FR2, the first FR2 RF front-end module configured for connectivity with an antenna array using beam steering for tracking a signal from the satellite.

In one or more embodiments, the IAB VMR module may comprise an IAB mobile termination (MT) configured to be operable for handling connectivity to the TN and NTN donor nodes by reception of the backhaul over a Uu interface.

In one or more embodiments, the IAB VMR module may comprise an IAB distributed unit (DU) configured to be operable for handling connectivity to user equipment inside the vehicle by relaying the Uu interface into the vehicle.

In one or more embodiments, the IAB VMR module may comprise a second FR2 RF front-end module configured to be operable for mmWave front end serving of the user equipment inside the vehicle over a mmWave antenna.

In one or more embodiments, the FR1 RF front-end module may be configured for connectivity with the multiple antennas for MIMO RF reception of backhaul over a Uu link from a TN donor node in the frequency range FR1 below 7 GHz, or for RF reception of backhaul over a Uu link from an NTN donor node in the satellite.

In one or more embodiments, the first FR2 RF front-end module may be configured for mmWave reception of backhaul over a Uu link from a TN donor node in the frequency range FR2 between 24.25 GHz and 52.6 GHz.

In one or more embodiments, the IAB VMR module of the communication unit may be configured to be operable for providing: FR1 MIMO backhaul over a Uu link to a TN donor node or an NTN donor node with a vehicular distributed antenna system; FR2 backhaul over a Uu link to a TN or NTN donor node with one or more array antennas using beam steering; and in-vehicle multi-operator support via network sharing functionality.

In one or more embodiments, the TN donor node may be a TN donor gNB, wherein the NTN donor node is an NTN donor gNB.

In one or more embodiments, the communication unit may comprise one or more e-Call antennas.

In another aspect a computer-implemented method is provided, comprising: monitoring, by a communication unit including an integrated access backhaul (IAB) vehicular mounted relay (VMR), communication parameters for a terrestrial network (TN) and a non-terrestrial network (NTN) for wireless communication; detecting, by the communication unit, a request from a telecommunication control unit (TCU) for a network connection; selecting, by the communication unit, a node from the TN or the NTN based on the communication parameters of the TN and the NTN; establishing, by the communication unit, the network connection on the selected node; and transparently switching to the selected node for the TCU based on changing parameter values of the TN and the NTN.

### BRIEF DESCRIPTION OF THE DRAWINGS

Various appended drawings illustrate examples of the present disclosure and cannot be considered limiting its scope.
**Figure 1** illustrates an exemplary example of a vehicular communication system, including a communication unit configured to provide wireless connectivity to the terrestrial network (TN) and the non-terrestrial network (NTN) outside the vehicle, according to some examples.
**Figure 2** includes a block diagram of the communication unit, according to some examples.
**Figure 3** is a flowchart of a method for transparent switching between terrestrial and non-terrestrial communications, according to some examples.
**Figure 4** is a flowchart of a method for configuring a communication unit to transparently provide wireless communications by selecting terrestrial or non-terrestrial communications, according to some examples.
**Figure 5** is a block diagram illustrating an example of a machine upon or by which one or more example process examples described herein may be implemented or controlled.

### DETAILED DESCRIPTION

The detailed description that follows describes exemplary examples, and the features disclosed are not intended to be limited to the expressly disclosed combinations. Therefore, unless otherwise noted, features disclosed herein may be combined together to form additional combinations that were not otherwise shown for purposes of brevity.

Exemplary examples are disclosed of vehicular communication systems comprising communication units that include an Integrated Access Backhaul (IAB) Vehicular Mounted Relay (VMR) modules. In exemplary examples, the communication unit is configured for providing wireless connectivity with a terrestrial network (TN) and a non-terrestrial network (NTN) outside the vehicle with backhauling over and seamless handover between the terrestrial and non-terrestrial networks. The communication unit is also configured to provide wireless connectivity to a telecommunication control unit (TCU) and user equipment (UE) inside the vehicle.

In exemplary examples, seamless handover between the terrestrial and non-terrestrial networks may be accomplished using system features of the cellular network by periodically measuring signal strength in the serving cell and neighboring cells, including actual NTN coverage. In some examples, handover may be triggered automatically to the cellular network providing the best signal quality, but other examples may use a preferred cellular network as long as the signal quality exceeds a predetermined threshold. Handover to the non-terrestrial network (NTN) may be triggered in case no sufficient coverage is provided by the terrestrial network (TN).

### GLOSSARY OF TERMS

Some of the concepts used for the description of the solution are presented below.

**Backhaul** is the process of transmitting data from the communication unit to a network node, via a terrestrial or non-terrestrial network node, for further distribution.

**IAB (Integrated Access Backhaul)** is a technology that combines access and backhaul functions in a single unit, allowing for efficient data transmission within cellular communication systems, including vehicular communication systems.

**Vehicular Mounted Relay (VMR)** is a module within the communication unit that facilitates integrated access and backhaul functions, enabling seamless connectivity for the vehicular communication system.

**Communication Unit** is a component of the vehicular communication system that includes the VMR module and is responsible for providing wireless connectivity to both external network nodes and in-vehicle devices.

**Telecommunication Control Unit (TCU)** is a component within the vehicle that manages communication between the communication unit and in-vehicle user equipment, as well as external networks. Alternatively, other components may share the same communication paths as the TCU, such as a head-unit controller, cockpit domain controller, engine control unit, or central computing node.

**Uu Interface** is a standard interface used in cellular networks for communication between user equipment and network nodes, such as base stations in a terrestrial or non-terrestrial network.

**IAB Distributed Unit (DU)** is a component of the IAB VMR module responsible for relaying data to/from the Uu interface into the vehicle for connectivity to user equipment.

**IAB Mobile Termination (MT)** is a component of the IAB VMR module responsible for handling connectivity to donor nodes by receiving backhaul data over the Uu interface.

**e-Call Subsystem** is a system within the communication unit that enables emergency calls to be made from within the vehicle using a dedicated microphone and speaker, and, optionally, a backup power system.

**NR UE Module** is a component within the communication unit that provides cellular connectivity when IAB VMR functionality is unavailable, acting as a single user interface to the cellular network. The NR UE module may support one or more radio access technologies such as 4G, 5G, 6G, and later generations.

**Handover** is the process of transferring an active communication session from one network node to another, such as from a terrestrial network to a non-terrestrial network, based on signal quality, quality of service (QoS) measurements, requirements (e.g., bandwidth, QoS, data limitations), and/or cost of service associated with the network.

**Non-Terrestrial Network (NTN)** is a network that includes satellite communication systems that may provide connectivity to areas not covered by terrestrial networks or may provide a redundant link that sends the same data as the TN.

**Terrestrial Network (TN)** is a ground-based communication network, such as a cellular network, providing connectivity to the communication unit.

**Wi-Fi Modem** is a device within the communication unit that provides wireless local area network (WLAN) access for in-vehicle users, connecting them to external networks via the NR UE module. The Wi-Fi Modem may support MIMO communications; however, for simplicity, the description focuses on single antenna functionality.

**Automotive Ethernet** is a high-speed digital communication link used for data transfer within a vehicle, connecting various components such as the communication unit and the TCU.

**Beam Steering** is a technique used in antenna arrays to direct the transmission or reception of signals in specific directions to improve communication quality.

**C-V2X (Cellular Vehicle-to-Everything)** is a communication technology that enables vehicles to communicate with each other and with infrastructure nodes using cellular protocols.

**Distributed Antenna System (DAS)** is a network of spatially separated antennas connected to a common source used to enhance wireless coverage, for example, within a vehicle. The terms DAS and vehicular DAS (vDAS) are interchangeable.

**FR1** is a frequency range used for RF communication, typically below 7 GHz, for MIMO RF (Multiple Input Multiple Output Radio Frequency) reception in the communication unit.

**FR2** is a frequency range used for mmWave communication, typically between 24.25 GHz and 52.6 GHz, for high-frequency data transmission, such as MIMO RF. The examples in this application are not limited to FR2 and may apply to future frequency ranges (e.g., FR3).

**mmWave** is a high-frequency radio wave used for short-range, high-capacity wireless communication, often in the FR2 frequency range.

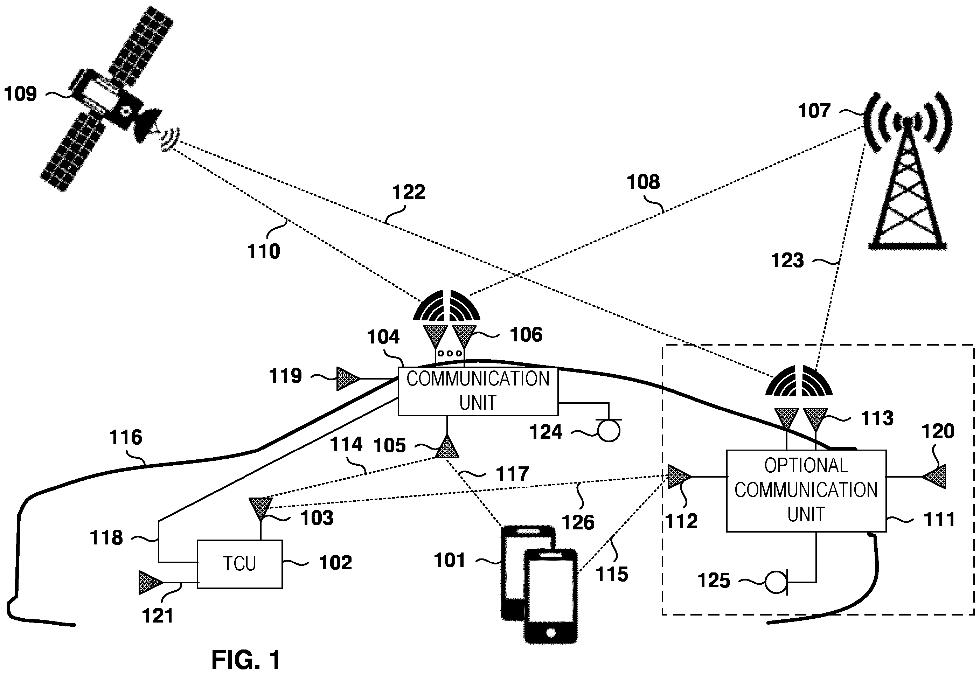

**Figure 1** illustrates an exemplary example of a vehicular communication system, including a communication unit 104 configured to provide wireless connectivity to the terrestrial network (TN) nodes and the non-terrestrial network (NTN) nodes outside the vehicle, according to some examples.

The vehicular communication system includes a communication unit 104 and a telecommunication control unit (TCU 102). The communication unit 104 may be configured to provide wireless connectivity to the TCU 102 and user equipment 101 inside the vehicle 116.

The communication unit 104 may be in communication with the TCU 102 via a wireless communication link 114 and a digital link 118 (e.g., optional ethernet link for redundancy, etc.). More specifically, the TCU 102 and the communication unit 104 respectively may be in communication using antennas 103 and 105 (e.g., TCU Wi-Fi and mmWave antenna(s) 103, Wi-Fi and mmWave antenna(s) 105, etc.) via the wireless communication link 114. The communication unit 104 is also in communication via the antenna 105 and communication link 117, with user equipment 101 (e.g., smartphones, other personal devices, user equipment, etc.) inside the vehicle 116.

The communication unit 104 is in communication selectively with either a terrestrial base station 107 of a terrestrial network (TN) or a satellite 109 of a non-terrestrial network (NTN) (e.g., 5G NTN, etc.) or both. The TN and the NTN may be offered by the same telecommunications provider or by different telecommunications providers. More specifically, the communication unit 104 is in communication with multiple distributed vehicle antennas 106, which, in turn, are in communication with either the terrestrial base station 107 via TN communication link 108 or the satellite 109 via NTN communication link 110.

In some examples, communication may be established to either the terrestrial network (TN) or the non-terrestrial network (NTN) and not to both at the same time. The selection of the connection for the communication unit 104 is based on the handover procedure disclosed herein. In other examples, communication may be established on both networks at the same time.

The antennas 106 include multiple antennas distributed around the vehicle 116 for MIMO TN (Multiple Input Multiple Output Terrestrial Network) reception. MIMO TN refers to the use of MIMO technology within a terrestrial network. It involves multiple antennas at both the transmitter and receiver to enhance data throughput and reliability, specifically for ground-based communication networks like cellular systems. MIMO RF (Multiple Input Multiple Output Radio Frequency) is a technology that uses multiple antennas at both the transmitter and receiver to improve communication performance by increasing data throughput and link reliability. It is employed in the communication unit for RF reception, enhancing signal quality and network capacity. In some examples, the NTN may also offer MIMO NTN.

The antennas 106 may further include at least one antenna for NTN (Non-Terrestrial Network) communication and at least one antenna (e.g., mmWave antenna, etc.) for TN (Terrestrial Network) communication.

By way of example, the antennas 106 may comprise a plurality of active antennas distributed around the vehicle 116 for providing 180/360-degree hemispherical coverage, e.g., including FR1 MIMO, FR2 mmWave, etc.

The plurality of active antennas may include a front active antenna located towards the front of the vehicle 116 (e.g., on the vehicle hood, etc.), a back active antenna located towards the back of the vehicle 116 (e.g., on the vehicle trunk, etc.), a top antenna located on top of the vehicle 116 (e.g., on the vehicle roof, etc.), and side active antennas respectively located along the passenger and driver sides of the vehicle 116 (e.g., on the side view mirrors, etc.). Continuing with this example, the links between the distributed active antennas and the communication unit 104 may comprise digital links with relatively high bandwidth, e.g., that are suitable for 5G eMBB / URLLC, V2X / RF BW MIMO, 25 GB Automotive Ethernet, etc. In other examples, the links may comprise 10 GB-Ethernet digital links or other digital links higher or lower than 10 GB, etc. The active antenna electronic includes an antenna as part of the RF Front-End Module (FEM), an analog-to-digital converter/digital-to-analog converter (ADC/DAC), IQ Data Compression/Decompression and Time Synchronization module (e.g., algorithms, etc.), and a high-speed digital link interface (e.g., 10GB-Ethernet interface, 25GB-Ethernet interface, etc.). The RF front-end module (FEM) may include a power amplifier for transmission and a low-noise amplifier for reception.

The vehicular communication system further includes a C-V2X (cellular vehicle to everything) antenna 119, e-Call antenna 121, and e-Call microphone and speaker 124. The communication unit 104 comprises the C-V2X antenna 119, the e-Call microphone, and speaker 124. A C-V2X modem in the TCU 102 is also in communication with the C-V2X antenna 119 and the communication unit 104 via either the digital link 118 or the wireless communication link 114. And the TCU is in communication with the e-Call antenna 121.

Also shown in Figure 1, there may be an optional second communication unit 111, e.g., for increased capacity or redundancy. The optional second communication unit 111 comprises antenna 112, vDAS 113 (Vehicular Distributed Antenna System), antenna 120, communication link 115, communication link 126, communication link 122, communication link 123, and e-Call microphone and speaker 125 that may be substantially similar or identical to the corresponding communication unit 104, antennas 105, antenna 106, antenna 119, communication link 117, communication link 114, communication link 110, communication link 108, and e-Call microphone and speaker 124 described above.

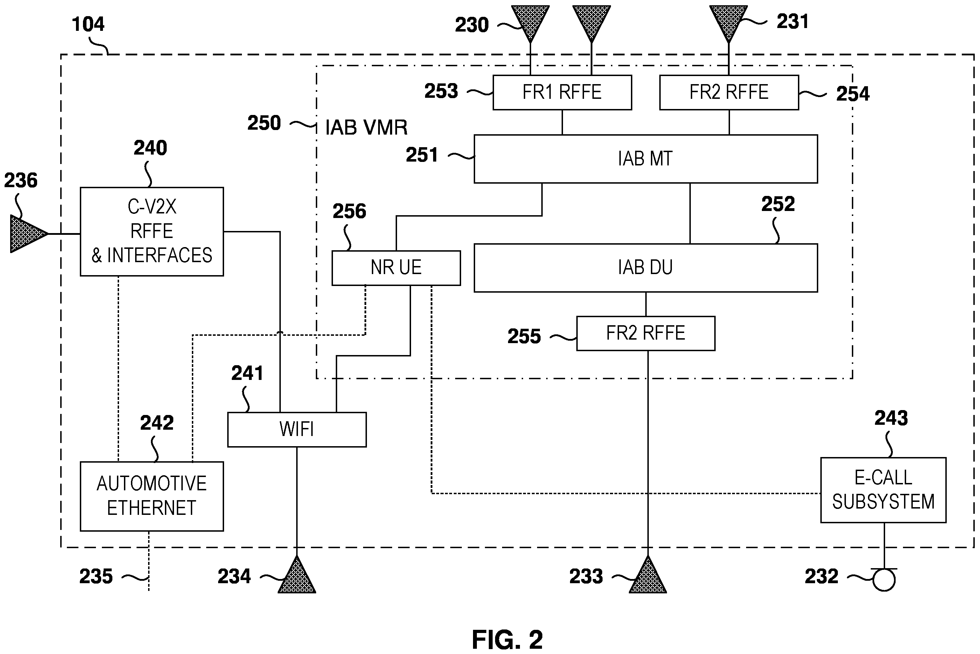

The communication unit 104 includes an integrated access backhaul (IAB) vehicular mounted relay (VMR) module (e.g., based on 3GPP specifications, etc.), as described below in more detail with reference to **Figure 2****.** The communication unit 104 with the IAB VMR module is configured to be operable for providing or enabling mobile integrated access and backhaul (e.g., 3GPP R18/R19 and beyond, etc.) for the vehicular communication system and includes the following:
- FR1 MIMO backhaul over Uu links 108 and 123 to donor gNB (Next Generation Node B) or NTN communication links 110 and 122 with the vehicle distributed antenna 106 system vDAS and optional vDAS 113. Further, gNB is a base station in 5G networks responsible for handling communication between user equipment and the network. Additionally, vDAS (Vehicular Distributed Antenna System) is a network of multiple antennas distributed around a vehicle to enhance wireless communication coverage and performance. It supports technologies like MIMO for improved data throughput and reliability;
- FR2 MIMO backhaul over Uu links 108 and 123 to donor gNB or NTN communication links 110 and 122 with one or more array antennas 106 or optional array antennas (e.g., vDAS 113) using beam steering; and
- In-vehicle multi-operator support (e.g., different Public Land Mobile Networks (PLMNs)) via the network sharing functionality if deployed in the actual coverage area.

The communication unit 104 with the IAB VMR module is usable by the vehicle communication system for providing wireless connectivity to the user equipment 101 and the TCU 102 inside the vehicle 116. The vehicular communication system and the communication unit 104 with the IAB VMR module may be configured such that:
- The FR2 in-vehicle avoids interference with the outside vehicle FR1 radio network;
- The network-sharing functionality enables wireless connectivity for multiple user devices or equipment with multiple mobile network operators or carriers;
- A separate NR UE (New Radio User Equipment) module may be operable for providing connectivity to the terrestrial network TN and non-terrestrial network NTN in case the IAB VMR functionality is not deployed in the actual serving cell;
- The IAB VMR module of the communication unit 104 may be connectable with one or more antennas (e.g., distributed antennas 106 and antennas vDAS 113, etc.) via a coaxial cable for analog RF signals or via Ethernet for digital RF samples;
- An optional second communication unit 111 may be provided for increased capacity or to provide redundancy;
- An optional automotive ethernet connectivity to the TCU 102 may be provided via digital link 118 to provide redundancy;
- An optional e-Call subsystem may be connected to the NR UE module to enable in-vehicle passengers to make emergency calls via an e-Call microphone and speaker; and
- The V2X antenna 119 may be connected to the communication unit 104 or to the C-V2X modem in the TCU 102, and, optionally, the V2X antenna 120 may be connected to the optional second communication unit 111 or to the C-V2X modem in the TCU 102.

In the illustrated example shown in **Figure 1****,** the vehicular communication system and the communication unit 104 with the IAB VMR module are configured to be operable for providing 5G (and beyond) backhauling to the non-terrestrial network NTN node (e.g., satellite 109) and the terrestrial network TN node (e.g., terrestrial base station 107) and seamless handover between the NTN and TN nodes.

The TCU 102 includes the Wi-Fi and/or mmWave antenna(s) 103 and a receiver to communicate with either the TN network via link 108 or the NTN network via link 110 through the IAB VMR module of the communication unit 104. The TCU 102 may also include a Wi-Fi modem, the Wi-Fi and/or mmWave antenna(s) 103, and a C-V2X RFFE (RF Front End) to receive/transmit data with either the TN network or the NTN network via the communication unit's NR UE module. RFFE is a component responsible for processing radio frequency signals, including modulation, demodulation, and amplification. It connects antennas to the communication system, enabling effective transmission and reception of wireless signals.

The TCU commonly comprises a cellular chipset that interfaces with the vehicle's bus system and an application processor. The TCU unit manages various functions such as services, door unlocking, and vehicle software updates. The communication unit functions as the radio frequency (RF) front end to ensure enhanced reception for smartphones, and it provides connectivity to the baseband modem and the application processor of the TCU.

The TCU facilitates the connection of an entire vehicle to the internet. For example, the TCU may be used to do over-the-air software updates for programs executing in the vehicle, where the TCU serves as an interface to external networks. The TCU also provides remote control capabilities and allows status monitoring via a smartphone. The user may request to preheat the vehicle or control the charging process from a remote location. The vehicle thus becomes integrated with the internet, simultaneously acting as both an endpoint connected to the internet and a receiver of internet-based features. Consequently, internet functionalities are accessible on the vehicle's head unit and large displays, facilitating features such as online navigation.

The communication unit 104 improves the wireless communication for the equipment in the vehicle by having more antennas, more features, and better communication hardware.

As more communication options are available in the market, these solutions require an increasing number of antennas to connect the TCU to external networks, including both the emerging non-terrestrial network (NTN) satellite communication and the advancements introduced by technologies such as 5G with multiple input, multiple output (MIMO) systems. These antennas must be spatially separated, necessitating numerous cables to establish the connection to the TCU. With the implementation of the integrated access backhaul (IAB) solution, a component positioned on the vehicle's roof consolidates all antennas and facilitates wireless distribution of signals to all connected nodes, including the TCU.

To achieve optimal reception for user equipment 101, the communication unit 104 adapts the signal to a millimeter wave band, which facilitates connectivity for in-cabin smartphones. These smartphones may utilize the millimeter wave band when external reception is unavailable. In some examples, the process utilizes the internet access backhaul as defined by the 3GPP standard.

By having a communication unit that coordinates wireless communications, it is possible to reduce power consumption and the number of antennas in the vehicle. Additionally, TCU backup antennas serve as a contingency measure. These antennas could be utilized if a connection is diminished or unavailable following an accident, thereby providing a backup connection for an eCall. One benefit of using the millimeter wave band in the vehicle is that it is a very high frequency, so it may not extend outside the vehicle.

In some examples, the TCU 102 and the communication unit 104 are combined into a single device; this way, the cost of the system is reduced by effectively eliminating a substantial portion of the TCU RF front end, allowing the TCU to connect to the millimeter wave from the communication unit using more affordable hardware. Most current systems have the TCU 102 installed in the vehicle by the manufacturer, and then the communication unit 104 is added in the aftermarket. By having a device in the vehicle that the manufacturer may install, the end user saves money as there are fewer devices to buy. Also, the combination may reduce the amount of antennas that have to be installed in the vehicle.

Thus, the communication unit 104 provides a solution that achieves a different communication architecture for the vehicle, where optimal signal reception is achieved by delivering the communication signals to the smartphone. This solution is cost-effective and simplifies operations by reducing limitations and constraints. A direct antenna connection is not required, thus eliminating antenna losses commonly observed with conventional setups. Currently, when high-frequency signals are transmitted to the antenna, lengthy cables often lead to efficiency challenges, particularly as the roof area frequently becomes excessively heated when the TCU is installed near the roof area because of exposure to the sun. This scenario constitutes a considerable challenge. Numerous issues are resolved with the elimination of direct antenna connections and the subsequent reduction of losses along antenna pathways.

**Figure 2** includes a block diagram of the communication unit 104, according to some examples. The communication unit 104 may be used in the vehicular communication system shown in **Figure 1** according to an exemplary example of the present disclosure.

The communication unit 104 includes several modules for providing wireless connectivity with the terrestrial network (TN) and the non-terrestrial network (NTN) from the vehicle 116, and for providing wireless connectivity to the TCU 102 and the user equipment 101 in or near the vehicle 116. The communication unit 104 includes an integrated access backhaul (IAB) vehicular mounted relay (VMR) module 250, optionally a cellular-V2X RF front end (C-V2X RFFE) and interfaces 240, a Wi-Fi modem 241, an optional automotive ethernet module 235, and an optional e-Call subsystem 243.

In some examples, the communication unit 104 includes an IAB VMR 250 module, a cellular-V2X RF front end (C-V2X RFFE) and interfaces 240, and a Wi-Fi modem 241. The communication unit 104 may optionally include an automotive ethernet interface 242 and an optional e-Call subsystem 243.

The IAB VMR 250 may be configured based on the 3GPP specified Mobile Integrated Access and Backhaul (IAB) - Vehicular Mounted Relay (VMR) (3GPP R18 /R19 and beyond) technology. The IAB VMR 250 includes an FR1 RF front-end module 253 configured for connectivity with multiple antennas 230 for MIMO RF transmission and reception of backhaul over Uu link to/from a TN Donor gNB in a frequency range FR1 (e.g., below 7 GHz, etc.) or for RF transmission and reception of backhaul over Uu to/from an NTN Donor gNB node in a satellite using FR1.

The IAB VMR 250 also includes an FR2 RF front-end module 254 and a FR2 RF front-end module 255. The FR2 front-end module 254 is configured for mmWave transmission and reception of backhaul over Uu to/from a TN Donor gNB in a frequency range FR2 (e.g., between 24.25 GHz and 52.6 GHz, beyond 52.6 GHz, etc.) with an antenna array 231. The FR2 front-end module 254 is configured for connectivity with an antenna array 231 using beam steering to track the signal from the satellite or the TN Donor gNB. The FR2 front-end module 255 may be configured to be operable for mmWave front end serving of the user equipment inside the vehicle over a mmWave antenna 233.

The IAB VMR 250 further includes an IAB MT 251 (Mobile Termination) and an IAB DU 252 (Distributed Unit). The IAB MT 251 is configured to be operable for handling connectivity with the donor gNB by transmission and reception of the backhaul over the Uu interface, e.g., as specified by 3GPP. The IAB DU 252 is configured to be operable for handling connectivity to user equipment (e.g., smartphones, other personal devices, and user equipment, etc.) inside the vehicle by relaying the standard Uu interface into the vehicle, e.g., as specified by 3GPP.

In case the IAB MT 251 notes that the IAB VMR functionality is not deployed in the actual cell, the IAB MT 251 can activate the separate NR UE 256 module to obtain connectivity to the cellular network. The NR UE 256 is connected to the Wi-Fi modem 241, which is configured to provide a WLAN hotspot for connectivity to the user equipment inside the vehicle and to the TCU via antenna(s) 103.

The separate NR UE 256 is configured to provide cellular connectivity when IAB VMR functionality is not available in the actual coverage area. In the case of the non-availability of integrated access backhaul (IAB), the IAB MT/DU 251/252 may not be able to provide access to the standard Uu interface for in-vehicle users. In this case, the NR UE 256 will be activated by the IAB MT 251.

The NR UE 256 is then able to access the cellular network as one single user. The NR UE 256 may be connected to the Wi-Fi modem 241, which provides in-vehicle connectivity via antenna 234. When the NR UE 256 is activated, the Wi-Fi modem 241 is operable for providing WLAN access for in-vehicle users via the NR UE 256 to the terrestrial network TN or the non-terrestrial network NTN and for providing WLAN access to the TCU for connectivity to the terrestrial network or the non-terrestrial network. Personal devices and the TCU can connect via Wi-Fi to the NR UE 256 for connectivity to the cellular network. Optionally, the NR UE 256 can be connected to the TCU via the automotive ethernet interface 242 and optional automotive ethernet module 235.

The C-V2X RFFE and interfaces 240 is the RF Frontend for C-V2X connectivity and is connected to the C-V2X antenna 236. The C-V2X RFFE and interfaces 240 is operable for performing RF modulation/demodulation, C-V2X baseband signal sampling, digitization, and interfacing for wired transmission to the Wi-Fi modem 241 or optionally to the automotive ethernet interface 242.

The Wi-Fi modem 241 is configured to provide RF coverage inside the vehicle over Wi-Fi antenna 234. In this exemplary example, the Wi-Fi modem 241 is operable for transferring digital baseband sample data wirelessly over the Wi-Fi antenna 234 between the C-V2X RFFE and interfaces 240 and the TCU. The Wi-Fi modem 241 is also operable for providing WLAN access for in-vehicle users via the NR UE 256 to the terrestrial network TN or the non-terrestrial network NTN.

The optional automotive ethernet module 242 is operable for transferring digital baseband sample data between the C-V2X RFFE and interfaces 240 and the TCU over the optional automotive ethernet interface 235.

The optional e-Call subsystem 243 is connected to the NR UE 256. The e-Call subsystem 243 is configured to enable in-vehicle passengers to make emergency calls via the e-Call microphone and speaker 232.

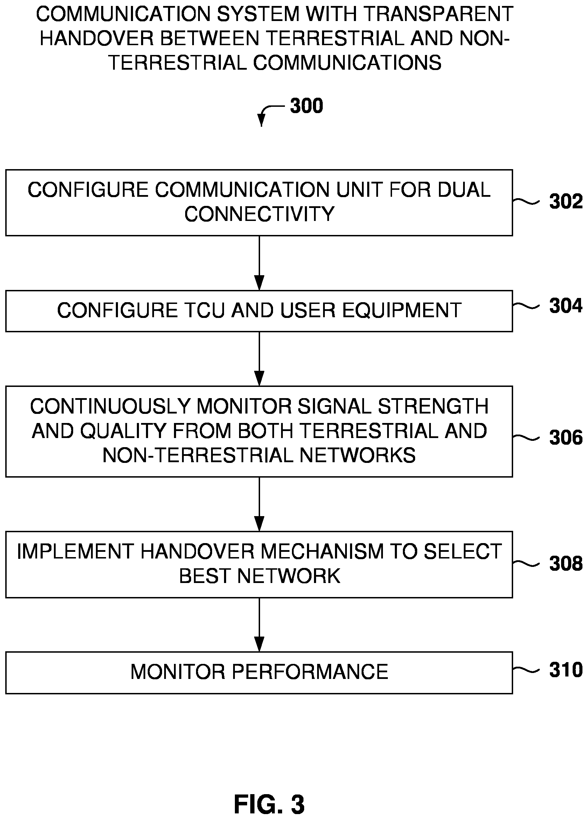

**Figure 3** is a flowchart of a method 300 for transparent switching between terrestrial and non-terrestrial communications, according to some examples. While the various operations in this flowchart are presented and described sequentially, one of ordinary skill will appreciate that some or all of the operations may be executed in a different order, be combined or omitted, or be executed in parallel.

The method 300 outlines the operations to enable seamless communication switching between terrestrial and non-terrestrial networks, ensuring transparency to the user equipment and the TCU.

At operation 302, the communication unit may be configured for dual connectivity. In one example, this configuration allows the unit to handle backhaul over Uu links from both terrestrial and non-terrestrial donor nodes, setting up the FR1 and FR2 RF front-end modules for connectivity with selected antennas. In another example, this configuration allows the unit to handle backhaul over Uu links from either terrestrial donor nodes or non-terrestrial donor nodes, setting up at least one of FR1 and FR2 RF front-end modules for connectivity with selected antennas. Further, the IAB MT and DU are configured for network termination and distribution.

The communication unit may be configured to support dual connectivity, allowing simultaneous monitoring of both TN and NTN and ensuring the IAB VMR module is set up to handle connections from both networks, with the ability to switch seamlessly. Further, the communication unit may be configured for network-sharing functionality to enable connectivity for multiple user devices with different mobile network operators.

From operation 302, the method flows to operation 304, which involves configuring the TCU and the user equipment. This operation connects the TCU with the communication unit via wireless and wired links, ensuring that the TCU can communicate with the IAB VMR module. The IAB VMR module may selectively connect to either the terrestrial or non-terrestrial network, at least based on signal quality, but other factors may also be considered, such as preferred cellular network, bandwidth, QoS, data limitations, or cost of service associated with the network.

The UE may be agnostic to the underlying network. The TCU may control/provide switching of the underlying network. This involves abstracting the network layer so that higher-layer applications and services continue to function without awareness of the underlying network.

From operation 304, the method flows to operation 306, where continuous monitoring of signal strength and quality of signals from both terrestrial and non-terrestrial networks is performed. This monitoring utilizes the communication unit's integrated sensors and algorithms to evaluate the available network based on measurements and parameters such as signal strength, latency, and bandwidth. For example, the communication unit may be configured to select an NTN network if the measured latency is less than a predetermined threshold of time. Alternatively, the communication unit may autonomously decide to select a different network if the latency reaches a second threshold of time.

In some examples, the communication unit selects between terrestrial and non-terrestrial communication based on several measurements and parameters, including:
- Preference: The communication unit may be configured to prefer one network over the other network when both networks are available. For example, the communication unit may be configured to utilize terrestrial communication when available since terrestrial communication tends to be faster and less expensive. For example, the preference may be configured by offset or bias values that may be applied to one or more measurements.
- Maps with available coverage, e.g., to prepare a handover in advance.
- Apply a self-learning algorithm to optimize for frequently traveled routes.
- Signal strength and quality: The communication unit continuously monitors the signal strength and quality from both terrestrial and non-terrestrial networks (NTN). Parameters such as signal-to-noise ratio (SNR), bit error rate (BER), and latency are evaluated to determine the best choice of network.
- Handover mechanism: The communication unit employs a handover mechanism that triggers based on predefined thresholds for signal quality. If the signal quality from the current network falls below a certain threshold, the handover process is initiated.
- Network availability: The availability of TN and NTN is assessed. If one network is unavailable or has limited coverage, the communication unit switches to the other network to maintain connectivity. For example, limited coverage may be determined using one or more measurements and/or parameters.
- Load balancing: The system may also consider network load and congestion. If one network is heavily loaded, the communication unit may switch to the less congested network to optimize performance.
- Seamless transition: The communication unit uses buffering and synchronization techniques to ensure that the switch between networks is seamless and transparent to the user equipment and the telecommunication control unit.
- Dual connectivity configuration: The communication unit is configured to support dual connectivity, allowing it to maintain connections with both TN and NTN simultaneously. This configuration enables quick switching without interrupting ongoing sessions if one connection goes down.
- Decision-making process: The decision to switch networks is made by the IAB Mobile Termination (MT) component, which manages connectivity to donor nodes. The IAB MT evaluates the monitored parameters and measurements and executes the handover based on the evaluation.

By employing these parameters and processes, the communication unit ensures reliable and efficient network switching, maintaining uninterrupted service quality for in-vehicle users.

From operation 306, the method flows to operation 308, which implements the handover mechanism to select the network. This mechanism triggers based on predefined rules and parameters or an artificial intelligence algorithm (e.g., self-learning), using the IAB MT to manage the handover process and ensure that the switch between networks is initiated when a network's quality falls below acceptable levels.

The communication unit is able to switch networks without interrupting ongoing communication sessions, for example, by buffering data during the switch and synchronizing with the new network to maintain session continuity.

From operation 308, the method flows to operation 310, where performance is monitored.

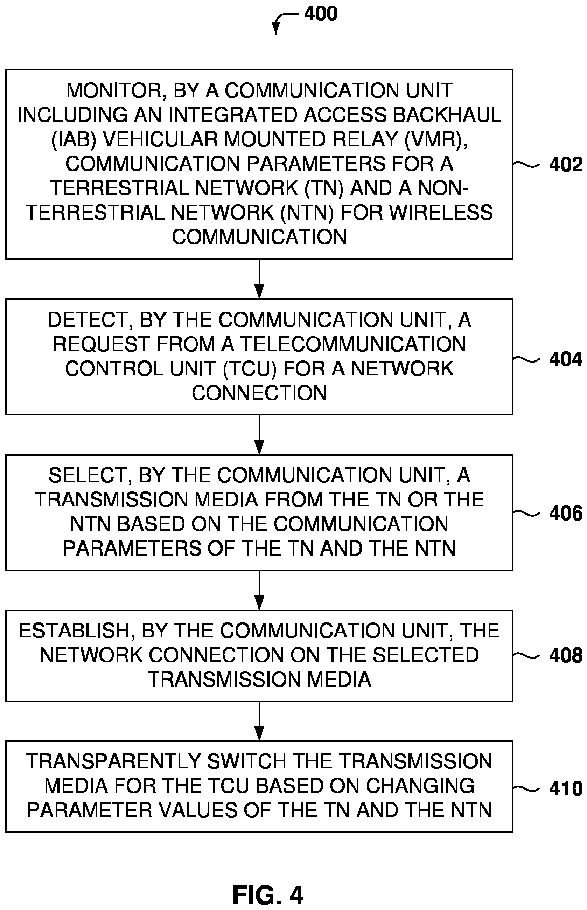

**Figure 4** is a flowchart of a method 400 for configuring a communication unit to transparently provide wireless communications by selecting terrestrial or non-terrestrial communications, according to some examples. While the various operations in this flowchart are presented and described sequentially, one of ordinary skill will appreciate that some or all of the operations may be executed in a different order, be combined or omitted, or be executed in parallel.

At operation 402, the communication unit, which includes an integrated access backhaul (IAB) vehicular mounted relay (VMR), monitors communication parameters for a terrestrial network (TN) and a non-terrestrial network (NTN) for wireless communication. This monitoring involves assessing and/or measuring various parameters such as signal strength, latency, and bandwidth to determine the current state of both networks.

From operation 402, the method flows to operation 404, where the communication unit detects a request from a telecommunication control unit (TCU) for a network connection. This detection involves recognizing a signal or command from the TCU indicating the request to establish a connection to either the TN or NTN.

From operation 404, the method flows to operation 406, where the communication unit selects either a TN node or an NTN node based on the communication parameters of the TN and the NTN and/or input from the TCU (e.g., QoS request). The selection process involves evaluating the monitored parameters to choose the most suitable network for the current conditions.

From operation 406, the method flows to operation 408, where the communication unit establishes the network connection on the selected node. This establishment involves configuring the network protocols and interfaces to initiate and maintain the connection with the chosen network.

From operation 408, the method flows to operation 410, where the communication unit transparently switches the transmission media for the TCU, at least based on changing measured values of the TN and the NTN. This switching process ensures that the TCU remains connected without interruption, adapting to variations in network conditions by seamlessly transitioning between the TN and NTN as needed.

It is noted that the method 400 may be implemented by the EU, the ECU, or both.

In view of the disclosure above, various examples are set forth below. It should be noted that one or more features of an example, taken in isolation or combination, should be considered within the disclosure of this application.

Example 1. A communication unit for a vehicle, comprising: an integrated access backhaul (IAB) vehicular mounted relay (VMR) module; a terrestrial network (TN) antenna for wireless communication via a TN; and a non-terrestrial network (NTN) antenna for wireless communication via a NTN, wherein the communication unit is configured for providing (1) wireless connectivity with the TN and the NTN, (2) backhauling over at least one of the TN and the NTN, and (3) seamless handover between the TN and the NTN; and at least one mmWave antenna for in-vehicle wireless communication.

Example 2. The communication unit of any one or more of the preceding Examples, further comprising: at least one antenna for in-vehicle wireless communication with one or more of a telecommunication control unit (TCU) and at least one user equipment inside the vehicle.

Example 3. The communication unit of any one or more of the preceding Examples, wherein the IAB VMR module is configured for communication selectively with at least one of the TN or the NTN.

Example 4. The communication unit of any one or more of the preceding Examples, further comprising: a digital link for connecting the communication unit to a TCU in the vehicle for in-vehicle wired communication between the communication unit and the TCU.

Example 5. The communication unit of any one or more of the preceding Examples, further comprising: a Wi-Fi modem configured for wirelessly communication, via one or more antennas, within the vehicle.

Example 6. The communication unit of any one or more of the preceding Examples, further comprising: a New Radio (NR) user equipment (UE) module for managing communications with UE connected via the Wi-Fi modem.

Example 7. The communication unit of any one or more of the preceding Examples, wherein the Wi-Fi modem is operable for providing WLAN access for in-vehicle users via the NR UE module to the terrestrial network or the non-terrestrial network when the NR UE module is activated.

Example 8. The communication unit of any one or more of the preceding Examples, wherein the Wi-Fi modem is operable for providing WLAN access to a TCU for connectivity to the TN or the NTN when the NR UE module is activated.

Example 9. The communication unit of any one or more of the preceding Examples, wherein the communication unit is configured to activate the NR UE module for providing cellular connectivity when IAB VMR functionality is not available in a coverage area.

Example 10. The communication unit of any one or more of the preceding Examples, further comprising: an e-Call subsystem connected with the NR UE module, the e-Call subsystem configured to enable an in-vehicle passenger to make an emergency call via an e-Call microphone and speaker.

Example 11. The communication unit of any one or more of the preceding Examples, further comprising: a C-V2X (Cellular Vehicle-to-Everything) RF front-end module configured for connectivity with a C-V2X antenna, wherein the Wi-Fi modem is configured for wirelessly transferring data, via one or more antennas, between the C-V2X RF front-end module and a TCU.

Example 12. The communication unit of any one or more of the preceding Examples, wherein the C-V2X RF front-end module is configured to be operable for RF modulation/demodulation, C-V2X baseband signal sampling, digitization, and interfacing for wired transmission to the Wi-Fi modem.

Example 13. The communication unit of any one or more of the preceding Examples, further comprising: an automotive ethernet module configured to be operable for transferring data over an automotive ethernet link between the communication unit and the TCU.

Example 14. The communication unit of any one or more of the preceding Examples, wherein the automotive ethernet module is configured to be operable for transferring data over the automotive ethernet link between the C-V2X front-end module and the TCU.

Example 15. The communication unit of any one or more of the preceding Examples, wherein the IAB VMR module comprises: an FR1 RF front-end module configured for connectivity with multiple antennas for MIMO RF reception of backhaul over a Uu link from a TN donor node in a frequency range FR1, or for RF reception of backhaul over a Uu link from an NTN donor node in a satellite; a first FR2 RF front-end module configured for mmWave reception of backhaul over a Uu link from a TN donor node in a frequency range FR2, the first FR2 RF front-end module configured for connectivity with an antenna array using beam steering for tracking a signal from the satellite; an IAB mobile termination (MT) configured to be operable for handling connectivity to the TN and NTN donor nodes by reception of the backhaul over a Uu interface; an IAB distributed unit (DU) configured to be operable for handling connectivity to user equipment inside the vehicle by relaying the Uu interface into the vehicle; and a second FR2 RF front-end module configured to be operable for mmWave front end serving of the user equipment inside the vehicle over a mmWave antenna.

Example 16. The communication unit of any one or more of the preceding Examples, wherein: the FR1 RF front-end module is configured for connectivity with the multiple antennas for MIMO RF reception of backhaul over a Uu link from a TN donor node in the frequency range FR1 below 7 GHz, or for RF reception of backhaul over a Uu link from an NTN donor node in the satellite; and the first FR2 RF front-end module is configured for mmWave reception of backhaul over a Uu link from a TN donor node in the frequency range FR2 between 24.25 GHz and 52.6 GHz.

Example 17. The communication unit of any one or more of the preceding Examples, wherein the IAB VMR module of the communication unit is configured to be operable for providing: FR1 MIMO backhaul over a Uu link to a TN donor node or an NTN donor node with a vehicular distributed antenna system; FR2 backhaul over a Uu link to a TN or NTN donor node with one or more array antennas using beam steering; and in-vehicle multi-operator support via network sharing functionality.

Example 18. The communication unit of any one or more of the preceding Examples, wherein the TN donor node is a TN donor gNB, wherein the NTN donor node is an NTN donor gNB.

Example 19. The communication unit of any one or more of the preceding Examples, further comprising: one or more e-Call antennas.

Example 20. A computer-implemented method, comprising: monitoring, by a communication unit including an integrated access backhaul (IAB) vehicular mounted relay (VMR), communication parameters for a terrestrial network (TN) and a non-terrestrial network (NTN) for wireless communication; detecting, by the communication unit, a request from a telecommunication control unit (TCU) for a network connection; selecting, by the communication unit, a node from the TN or the NTN based on the communication parameters of the TN and the NTN; establishing, by the communication unit, the network connection on the selected node; and transparently switching to the selected node for the TCU based on changing parameter values of the TN and the NTN.

Example 21. The communication unit of any one or more of the preceding Examples, wherein the communication unit comprises first and second communication units for increased capacity or redundancy.

Example 22. The communication unit of any one or more of the preceding Examples, wherein: the TCU includes a C-V2X modem; and the vehicular communication system includes one or more C-V2X antennas connected, via the communication unit, with the C-V2X modem in the TCU.

Example 23. The communication unit of any one or more of the preceding Examples, wherein the communication unit is configured with automotive ethernet connectivity to the TCU for redundancy.

Example 24. The communication unit of any one or more of the preceding Examples, wherein the vehicular communication system includes one or more e-Call antennas connected with the communication unit or with the TCU.

Example 25. The communication unit of any one or more of the preceding Examples, wherein: the vehicular communication system comprises a distributed antenna system including a plurality of antennas distributed around the vehicle, the plurality of antennas including one or more antennas for MIMO TN reception and at least one antenna for NTN communication; and a link connects each of the plurality of antennas of the distributed antenna system to the IAB VMR module of the communication unit.

Example 26. The communication unit of any one or more of the preceding Examples, wherein the communication unit is configured for communication selectively with either the terrestrial network (TN) or with the non-terrestrial network (NTN), whereby the selection of either the terrestrial network (TN) or with the non-terrestrial network (NTN) for the communication unit is based on a handover procedure that includes: periodically measuring signal strength in a serving cell and neighboring cells; and automatically triggering handover to the cell providing the best signal quality, or automatically triggering handover to the non-terrestrial network (NTN) if there is no sufficient coverage provided by the terrestrial network (TN).

Example 27. A communication unit for a vehicular communication system, the communication unit comprising:
an integrated access backhaul (IAB) vehicular mounted relay (VMR) module; and
at least one antenna for providing in-vehicle wireless communication with a telecommunication control unit (TCU) and user equipment inside a vehicle;
whereby the communication unit is configured for providing:
wireless connectivity with a terrestrial network (TN) and a non-terrestrial network (NTN) outside the vehicle with backhauling over the non-terrestrial network and terrestrial network and seamless handover between the non-terrestrial and terrestrial networks; and
wireless connectivity to the TCU and the user equipment inside the vehicle.

Example 28. The communication unit of Example 27, wherein the communication unit comprises a Wi-Fi modem configured for wirelessly transferring data, via one or more antennas, between the communication unit and the TCU.

Example 29. The communication unit of any one or more of Examples 27-28, wherein the communication unit comprises an NR UE module connected with the Wi-Fi modem.

Example 30. The communication unit of any one or more of Examples 27-29, wherein the Wi-Fi modem is operable for providing WLAN access for in-vehicle users via the NR UE module to the terrestrial network or the non-terrestrial network when the NR UE module is activated.

Example 31. The communication unit of any one or more of Examples 27-30, wherein the Wi-Fi modem is operable for providing WLAN access to the TCU for connectivity to the terrestrial network or the non-terrestrial network when the NR UE module is activated.

Example 32. The communication unit of any one or more of Examples 27-31, wherein the communication unit is configured to activate the NR UE module for providing cellular connectivity when the IAB VRM functionality is not available in the actual coverage area.

Example 33. The communication unit of any one or more of Examples 27-32, wherein the communication unit comprises an e-Call subsystem connected with the NR UE module, the e-Call subsystem configured to enable an in-vehicle passenger to make an emergency call via an e-Call microphone and speaker.

Example 34. The communication unit of any one or more of Examples 27-33, wherein: the communication unit comprises a C-V2X RF front-end module configured for connectivity with a C-V2X antenna; and the Wi-Fi modem is configured for wirelessly transferring data, via one or more antennas, between the C-V2X RF front-end module and the TCU.

Example 35. The communication unit of any one or more of Examples 27-34, wherein the C-V2X RF front-end module is configured to be operable for RF modulation/demodulation, C-V2X baseband signal sampling, digitization, and interfacing for wired transmission to the Wi-Fi modem.

Example 36. The communication unit of any one or more of Examples 27-35, wherein the communication unit comprises an automotive ethernet module configured to be operable for transferring data over an automotive ethernet link between the communication unit and the TCU.

Example 37. The communication unit of any one or more of Examples 27-36, wherein: the communication unit comprises a C-V2X front-end module configured for connectivity with a C-V2X antenna and for interfacing for wired transmission to the automotive ethernet module; and the automotive ethernet module is configured to be operable for transferring data over the automotive ethernet link between the C-V2X front-end module and the TCU.

Example 38. The communication unit of any one or more of Examples 27-37, wherein the IAB VMR module of the communication unit comprises:
an FR1 RF front-end module configured for connectivity with multiple antennas for MIMO RF reception of backhaul over a Uu link from a TN donor node in a frequency range FR1, or for RF reception of backhaul over a Uu link from an NTN donor node in a satellite;
a first FR2 RF front-end module configured for mmWave reception of backhaul over a Uu link from a TN donor node in a frequency range FR2, the FR2 front-end module configured for connectivity with an antenna array using beam steering for tracking the signal from the satellite;
an IAB mobile termination (MT) configured to be operable for handling connectivity to the TN and NTN donor nodes by reception of the backhaul over a Uu interface;
an IAB distributed unit (DU) configured to be operable for handling connectivity to the user equipment inside the vehicle by relaying the Uu interface into the vehicle; and
a second FR2 RF front-end module configured to be operable for mmWave front end serving of the user equipment inside the vehicle over a mmWave antenna.

Example 39. The communication unit of any one or more of Examples 27-38, wherein: the FR1 RF front-end module is configured for connectivity with the multiple antennas for MIMO RF reception of backhaul over a Uu link from a TN donor node in the frequency range FR1 below 7 GHz, or for RF reception of backhaul over a Uu link from the NTN donor node in the satellite; and the FR2 RF front-end module is configured for mmWave reception of backhaul over a Uu link from a TN donor node in the frequency range FR2 between Example 24.25 GHz and Example 52.6 GHz.

Example 40. The communication unit of any one or more of Examples 27-39, wherein the IAB VMR module is configured to be operable for providing: FR1 MIMO backhaul over a Uu link to a TN or NTN donor node with a vehicular distributed antenna system; FR2 backhaul over a Uu link to a TN or NTN donor node with one or more array antennas using beam steering; and in-vehicle multi operator support via the network sharing functionality.

Example 41. The communication unit of any one or more of Examples 27-40, wherein the communication unit is configured to be operable for providing wireless connectivity to the TCU and the user equipment inside the vehicle such that: FR2 in-vehicle avoids interference with the outside vehicle FR1 radio network; network sharing functionality enables wireless connectivity for multiple user devices with multiple mobile network operators or carriers; the IAB VMR module is connectable with one or more antennas via a coaxial cable for analog RF signals or via Ethernet for digital RF samples; and a separate NR UE module is operable for providing connectivity to the terrestrial network TN and non-terrestrial network NTN when the IAB VMR functionality is not deployed in the actual serving cell.

Example 42. The communication unit of any one or more of Examples 27-41, wherein the communication unit is configured for communication selectively with either the terrestrial network (TN) or with the non-terrestrial network (NTN), whereby the selection of either the terrestrial network (TN) or with the non-terrestrial network (NTN) for the communication unit is based on a handover procedure that includes: periodically measuring signal strength in a serving cell and neighboring cells; and automatically triggering handover to the cell providing the best signal quality, or automatically triggering handover to the non-terrestrial network (NTN) if there is no sufficient coverage provided by the terrestrial network (TN).

Example 43. A computer-implemented method, comprising:
monitoring, by a communication unit including an integrated access backhaul (IAB) vehicular mounted relay (VMR), communication parameters for a terrestrial network (TN) and a non-terrestrial network (NTN) for wireless communication;
detecting, by the communication unit, a request from a telecommunication control unit (TCU) for a network connection;
selecting, by the communication unit, a transmission media from the TN or the NTN based on the communication parameters of the TN and the NTN;
establishing, by the communication unit, the network connection on the selected transmission media; and
transparently switching the transmission media for the TCU based on changing parameter values of the TN and the NTN.

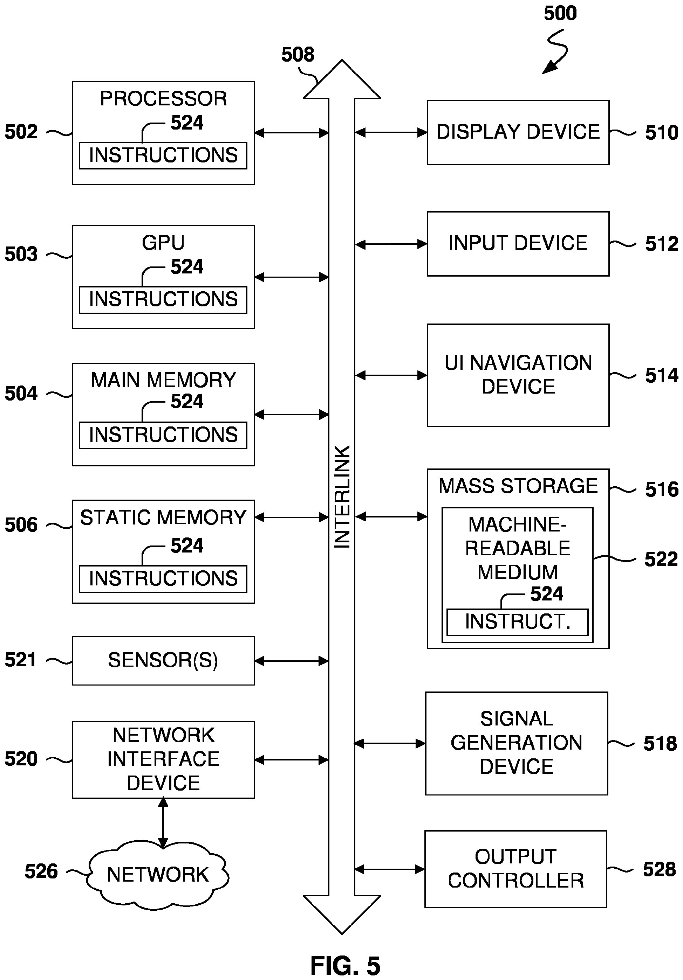

**Figure 5** is a block diagram illustrating an example of a machine 500 upon or by which one or more example process examples described herein may be implemented or controlled. In alternative examples, the machine 500 may operate as a standalone device or be connected (e.g., networked) to other machines. In a networked deployment, the machine 500 may operate in the capacity of a server machine, a client machine, or both in server-client network environments. In an example, the machine 500 may act as a peer machine in a peer-to-peer (P2P) (or other distributed) network environment. Further, while only a single machine 500 is illustrated, the term "machine" shall also be taken to include any collection of machines that individually or jointly execute a set (or multiple sets) of instructions to perform any one or more of the methodologies discussed herein, such as via cloud computing, software as a service (SaaS), or other computer cluster configurations.

Examples, as described herein, may include, or may operate by, logic, various components, or mechanisms. Circuitry is a collection of circuits implemented in tangible entities, including hardware (e.g., simple circuits, gates, logic). Circuitry membership may be flexible over time and underlying hardware variability. Circuitries include members that may, alone or in combination, perform specified operations when operating. In an example, the hardware of the circuitry may be immutably designed to carry out a specific operation (e.g., hardwired). In an example, the hardware of the circuitry may include variably connected physical components (e.g., execution units, transistors, simple circuits), including a computer-readable medium physically modified (e.g., magnetically, electrically, by moveable placement of invariant massed particles) to encode instructions of the specific operation. In connecting the physical components, the underlying electrical properties of a hardware constituent are changed (for example, from an insulator to a conductor or vice versa). The instructions enable embedded hardware (e.g., the execution units or a loading mechanism) to create members of the circuitry in hardware via the variable connections to carry out portions of the specific operation when in operation. Accordingly, the computer-readable medium is communicatively coupled to the other circuitry components when the device operates. In an example, any of the physical components may be used in more than one member of more than one circuitry. For example, under operation, execution units may be used in a first circuit of a first circuitry at one point in time and reused by a second circuit in the first circuitry or by a third circuit in a second circuitry at a different time.

The machine 500 (e.g., computer system) may include a hardware processor 502 (e.g., a central processing unit (CPU), a hardware processor core, or any combination thereof), a graphics processing unit (GPU 503), a main memory 504, and a static memory 506, some or all of which may communicate with each other via an interlink 508 (e.g., bus). The machine 500 may further include a display device 510, an alphanumeric input device 512 (e.g., a keyboard), and a user interface (UI) navigation device 514 (e.g., a mouse). In an example, the display device 510, alphanumeric input device 512, and UI navigation device 514 may be a touch screen display. The machine 500 may additionally include a mass storage device 516 (e.g., drive unit), a signal generation device 518 (e.g., a speaker), a network interface device 520, and one or more sensors 521, such as a Global Positioning System (GPS) sensor, compass, accelerometer, or another sensor. The machine 500 may include an output controller 528, such as a serial (e.g., universal serial bus (USB)), parallel, or other wired or wireless (e.g., infrared (IR), near field communication (NFC)) connection to communicate with or control one or more peripheral devices (e.g., a printer, card reader).

The processor 502 refers to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor 502 may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof.

The processor 502 may further be a multi-core processor having two or more independent processors (sometimes referred to as "cores") that may execute instructions contemporaneously. Multi-core processors contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. The processor 502 may be emulated in software, running on a physical processor, as a virtual processor or virtual circuit. The virtual processor may behave like an independent processor but is implemented in software rather than hardware.

The mass storage device 516 may include a machine-readable medium 522 on which one or more sets of data structures or instructions 524 (e.g., software) embodying or utilized by any of the techniques or functions described herein. The instructions 524 may also reside, completely or at least partially, within the main memory 504, within the static memory 506, within the hardware processor 502, or the GPU 503 during execution thereof by the machine 500. For example, one or any combination of the hardware processor 502, the GPU 503, the main memory 504, the static memory 506, or the mass storage device 516 may constitute machine-readable media.

While the machine-readable medium 522 is illustrated as a single medium, the term "machine-readable medium" may include a single medium or multiple media (e.g., a centralized or distributed database and associated caches and servers) configured to store one or more instructions 524.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

The term "machine-readable medium" may include any medium that is capable of storing, encoding, or carrying instructions 524 for execution by the machine 500 and that causes the machine 500 to perform any one or more of the techniques of the present disclosure or that is capable of storing, encoding, or carrying data structures used by or associated with such instructions 524. Non-limiting machine-readable medium examples may include solid-state memories and optical and magnetic media. For example, a massed machine-readable medium comprises a machine-readable medium 522 with a plurality of particles having invariant (e.g., rest) mass. Accordingly, massed machine-readable media are not transitory propagating signals. Specific examples of massed machine-readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

As used herein, the terms "machine-storage medium," "device-storage medium," and "computer-storage medium" mean the same thing and may be used interchangeably in this disclosure. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate arrays (FPGAs), and flash memory devices; magnetic disks such as internal hard disks and removable disks; magneto-optical disks; and CD-ROM and DVD-ROM disks. The terms "machine-storage medium," "computer-storage medium," and "device-storage medium" specifically exclude carrier waves, modulated data signals, and other such media.

The instructions 524 may be transmitted or received over a communications network 526 using a transmission medium via the network interface device 520. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 524 for execution by the machine 500, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented separately. These and other variations, modifications, additions, and improvements fall within the scope of the subject matter herein.

The examples illustrated herein are described in sufficient detail to enable those skilled in the art to practice the teachings disclosed. Other examples may be used and derived therefrom, such that structural and logical substitutions and changes may be made without departing from the scope of this disclosure. The Detailed Description, therefore, is not to be taken in a limiting sense, and the scope of various examples is defined only by the appended claims, along with the full range of equivalents to which such claims are entitled.

Additionally, as used in this disclosure, phrases of the form "at least one of an A, a B, or a C," "at least one of A, B, and C," and the like should be interpreted to select at least one from the group that comprises "A, B, and C." Unless explicitly stated otherwise in connection with a particular instance, in this disclosure, this manner of phrasing does not mean "at least one of A, at least one of B, and at least one of C." As used in this disclosure, the example "at least one of an A, a B, or a C" would cover any of the following selections: {A}, f B}, {C}, {A, B}, {A, C}, {B, C}, and {A, B, C}.

Moreover, plural instances may be provided for resources, operations, or structures described herein as a single instance. Additionally, boundaries between various resources, operations, modules, engines, and data stores are somewhat arbitrary, and particular operations are illustrated in the context of specific illustrative configurations. Other allocations of functionality are envisioned and may fall within the scope of various examples of the present disclosure. In general, structures and functionality are presented as separate resources in the example; configurations may be implemented as a combined structure or resource. Similarly, structures and functionality presented as a single resource may be implemented as separate resources. These and other variations, modifications, additions, and improvements fall within a scope of examples of the present disclosure as represented by the appended claims. Accordingly, the specification and drawings are to be regarded in an illustrative rather than a restrictive sense.

## Claims

1. A communication unit for a vehicle, comprising:
an integrated access backhaul (IAB) vehicular mounted relay (VMR) module;
a terrestrial network (TN) antenna for wireless communication via a TN; and
a non-terrestrial network (NTN) antenna for wireless communication via a NTN,
wherein the communication unit is configured for providing (1) wireless connectivity with the TN and the NTN, (2) backhauling over at least one of the TN and the NTN, and (3) seamless handover between the TN and the NTN; and
at least one mmWave antenna for in-vehicle wireless communication.

2. The communication unit of claim 1, further comprising at least one antenna for in-vehicle wireless communication with one or more of a telecommunication control unit (TCU) and at least one user equipment inside the vehicle.

3. The communication unit of any preceding claim, wherein the IAB VMR module is configured for communication selectively with at least one of the TN or the NTN.

4. The communication unit of any preceding claim, further comprising a digital link for connecting the communication unit to a TCU in the vehicle for in-vehicle wired communication between the communication unit and the TCU.

5. The communication unit of any preceding claim, further comprising a Wi-Fi modem configured for wirelessly communication, via one or more antennas, within the vehicle.

6. The communication unit of any preceding claim, further comprising a New Radio (NR) user equipment (UE) module for managing communications with UE connected via the Wi-Fi modem.

7. The communication unit of any preceding claim 5 or 6, wherein the Wi-Fi modem is operable for providing WLAN access for in-vehicle users via the NR UE module to the terrestrial network or the non-terrestrial network when the NR UE module is activated and/or for providing WLAN access to a TCU for connectivity to the TN or the NTN when the NR UE module is activated.

8. The communication unit of any preceding claim 6-7, wherein the communication unit is configured to activate the NR UE module for providing cellular connectivity when IAB VMR functionality is not available in a coverage area.

9. The communication unit of any preceding claim, further comprising an e-Call subsystem connected with the NR UE module, the e-Call subsystem configured to enable an in-vehicle passenger to make an emergency call via an e-Call microphone and speaker and/or further comprising one or more e-Call antennas.

10. The communication unit of any preceding claim 5-9, further comprising:
a C-V2X (Cellular Vehicle-to-Everything) RF front-end module configured for connectivity with a C-V2X antenna,
wherein the Wi-Fi modem is configured for wirelessly transferring data, via one or more antennas, between the C-V2X RF front-end module and a TCU, preferably the C-V2X RF front-end module is configured to be operable for RF modulation/demodulation, C-V2X baseband signal sampling, digitization, and interfacing for wired transmission to the Wi-Fi modem.

11. The communication unit of any preceding claim, further comprising an automotive ethernet module configured to be operable for transferring data over an automotive ethernet link between the communication unit and the TCU, preferably the automotive ethernet module is configured to be operable for transferring data over the automotive ethernet link between the C-V2X front-end module and the TCU.

12. The communication unit of any one of the preceding claims, wherein the IAB VMR module comprises:
an FR1 RF front-end module configured for connectivity with multiple antennas for MIMO RF reception of backhaul over a Uu link from a TN donor node in a frequency range FR1, or for RF reception of backhaul over a Uu link from an NTN donor node in a satellite; a first FR2 RF front-end module configured for mmWave reception of backhaul over a Uu link from a TN donor node in a frequency range FR2, the first FR2 RF front-end module configured for connectivity with an antenna array using beam steering for tracking a signal from the satellite;
an IAB mobile termination (MT) configured to be operable for handling connectivity to the TN and NTN donor nodes by reception of the backhaul over a Uu interface;
an IAB distributed unit (DU) configured to be operable for handling connectivity to user equipment inside the vehicle by relaying the Uu interface into the vehicle; and
a second FR2 RF front-end module configured to be operable for mmWave front end serving of the user equipment inside the vehicle over a mmWave antenna,
preferably the FR1 RF front-end module is configured for connectivity with the multiple antennas for MIMO RF reception of backhaul over a Uu link from a TN donor node in the frequency range FR1 below 7 GHz, or for RF reception of backhaul over a Uu link from an NTN donor node in the satellite; and
the first FR2 RF front-end module is configured for mmWave reception of backhaul over a Uu link from a TN donor node in the frequency range FR2 between 24.25 GHz and 52.6 GHz.

13. The communication unit of one of the preceding claims, wherein the IAB VMR module of the communication unit is configured to be operable for providing:
FR1 MIMO backhaul over a Uu link to a TN donor node or an NTN donor node with a vehicular distributed antenna system;
FR2 backhaul over a Uu link to a TN or NTN donor node with one or more array antennas using beam steering; and
in-vehicle multi-operator support via network sharing functionality,
preferably the TN donor node is a TN donor gNB, wherein the NTN donor node is an NTN donor gNB.

14. A computer-implemented method, comprising:
monitoring, by a communication unit including an integrated access backhaul (IAB) vehicular mounted relay (VMR), communication parameters for a terrestrial network (TN) and a non-terrestrial network (NTN) for wireless communication;
detecting, by the communication unit, a request from a telecommunication control unit (TCU) for a network connection;
selecting, by the communication unit, a node from the TN or the NTN based on the communication parameters of the TN and the NTN;
establishing, by the communication unit, the network connection on the selected node; and
transparently switching to the selected node for the TCU based on changing parameter values of the TN and the NTN.

15. At least one machine-readable media including instructions that, when executed by a machine, cause the machine to perform the method of claim 14.
